# EUROPEAN PATENT SPECIFICATION

(11) **EP 4 032 942 B1**
(45) Date of publication and mention of the grant of the patent: **27.11.2024**
(21) Application number: 20865436.8
(22) Date of filing: 15.09.2020
(51) Int. Cl.: C08J 3/16, D21H 17/70, D06M 11/44, D06M 23/08

(54) **GRANULES CONTAINING COMPOSITE FIBERS COMPOSED OF FIBERS AND INORGANIC PARTICLES**
GRANULAT MIT VERBUNDFASERN AUS FASERN UND ANORGANISCHEN PARTIKELN
GRANULÉS CONTENANT DES FIBRES COMPOSITES COMPOSÉES DE FIBRES ET DE PARTICULES INORGANIQUES

(30) Priority: 20.09.2019 JP 2019172061
(43) Date of publication of application: 27.07.2022
(73) Proprietor: Nippon Paper Industries Co., Ltd., Tokyo 114-0002 (JP)
(72) Inventor: OISHI, Masatoshi, Tokyo 114-0002 (JP); SHIGEMI, Atsushi, Tokyo 114-0002 (JP); NAKATANI, Toru, Tokyo 114-0002 (JP); NINAGAWA, Koji, Tokyo 114-0002 (JP); SHINKURA, Hiroshi, Tokyo 114-0002 (JP)
(74) Representative: Carpmaels & Ransford LLP
(86) International application number: PCT/JP2020/034849
(87) International publication number: WO 2021/054312

(56) References cited:
- EP-A1- 3 358 073
- WO-A1-2018/097312
- WO-A1-2018/097312
- JP-A- 2004 502 048
- JP-A- 2017 057 285

## Description

### TECHNICAL FIELD

The present invention relates to granules containing a complex fiber of a fiber with inorganic particles and processes for preparing them.

### BACKGROUND ART

Complex fibers having various characteristics have been developed by depositing inorganic particles on the surface of a fiber. For example, it has been known that inorganic particles are deposited on the surface of a fiber by synthesizing the inorganic particles in the presence of the fiber.

For example, there have been known complex fibers of calcium carbonate with a fiber (PTL 1), complex fibers of magnesium carbonate with a fiber (PTL 2), complex fibers of calcium phosphate with a fiber (PTL 3), complex fibers of hydrotalcite with a fiber (PTL 4), and complex fibers of silica/alumina with a fiber (PTL 5).

Further, there have also been reported complex fibers wherein the surface of a fiber is mostly covered by inorganic particles (PTL 6), complex fibers wherein inorganic particles are deposited on the surface of a fiber to improve flame retardancy (PTL 7), and the like. WO 2018/097312 A1 is said to address the problem of providing products comprising a fiber composite of inorganic particles and fiber. It provides products comprising a fiber composite of inorganic particles and fiber, said products being in the form of an aqueous suspension, pulp, sheet, powder, microsphere grains, granules, pellets, mold, yarn or foam.
EP 3 358 073 A1 aims to provide cellulose fibers covered by inorganic particles on the fiber surface. It describes complexes of a cellulose fiber and inorganic particles wherein 15 % or more of the surface of the cellulose fiber is covered by the inorganic particles.

### CITATION LIST

### PATENT LITERATURE

PTL 1: International Publication Number WO2015/152283
PTL 2: International Publication Number WO2017/043580
PTL 3: International Publication Number WO2017/043585
PTL 4: International Publication Number WO2018/030521
PTL 5: International Publication Number WO2019/163659
PTL 6: International Publication Number WO2017/057154
PTL 7: International Publication Number WO2019/159943

### SUMMARY OF INVENTION

### TECHNICAL PROBLEM

The present invention aims to provide highly flowable granules comprising a complex fiber of a fiber with inorganic particles.

### SOLUTION TO PROBLEM

The invention is defined by the appended claims.

As a result of careful studies to solve the problems described above, we found that excellent granules can be obtained by controlling the moisture content before or during granulation, and finally accomplished the present invention.

Thus, the present invention includes the following aspects:
[1] A granule comprising a complex fiber of a cellulose fiber with inorganic particles, and having a particle size of 0.1 to 10 mm and a water content of less than 60 %, wherein the inorganic particles comprise a metal salt of calcium, magnesium, barium or aluminum, or metal particles containing titanium, copper or zinc, or a silicate.
[2] The granule of [1], having an angle of repose of 30 to 58°.
[3] The granule of [1] or [2], wherein the inorganic particles are barium sulfate.
[4] The granule of any one of [1] to [3], wherein the inorganic particles comprise hydrotalcite.
[5] The granule of any one of [1] to [4], wherein the mass fraction of the inorganic particles in the granule is 10 % or more.
[6] The granule of any one of [1] to [5], wherein the raw material of the cellulose fiber includes wood pulp fibers.
[7] The granule of any one of [1] to [6], wherein 15 % or more of the surface of the cellulose fiber is covered by the inorganic particles.
[8] The granule of any one of claim 1 to 7, wherein the granule has a particle size of 0.2 or more and 4 mm or less.
[9] A process for preparing the granule of any one of [1] to [8], comprising the steps of: synthesizing inorganic particles in a liquid containing a cellulose fiber to give a complex fiber; and granulating the complex fiber into granules having a particle size of 0.1 to 10 mm, wherein the inorganic particles comprise a metal salt of calcium, magnesium, barium or aluminum, or metal particles containing titanium, copper or zinc, or a silicate.
[10] The process of [9], wherein the complex fiber is granulated while it is dried in the granulating step.
[11] The process of [9], wherein the complex fiber is granulated after it has been adjusted to a water content of less than 60 %.
[12] The process of [9], wherein the complex fiber is granulated after it has been comminuted.

### ADVANTAGEOUS EFFECTS OF INVENTION

According to the present invention, granules according to the claims comprising a complex fiber of a fiber with inorganic particles, which has been processed into a particulate form, can be obtained. The resulting granules exhibit high flowability and dispersibility so that they can be readily incorporated into other products to confer the functionality depending on the characteristics of the inorganic particles on the other products. Especially when inorganic particles having high deodorizing effect are used, granules having high deodorizing effect can be obtained. Further, the use of a complex fiber of a fiber with inorganic particles as a raw material of the granules ensures that the functionality depending on the characteristics of the inorganic particles can be conferred while reducing the amount of the inorganic particles incorporated.

### BRIEF DESCRIPTION OF DRAWINGS

Fig. 1 is a schematic diagram showing a preparation system used in Experiment 1 (P: pump).
Fig. 2 shows an electron micrograph of Sample a (magnification: 3000X).
Fig. 3 shows an electron micrograph of Sample b (magnification: 3000X).
Fig. 4 shows an electron micrograph of Sample c (magnification: 3000X).
Fig. 5 shows an electron micrograph of Sample d (magnification: 3000X).
Fig. 6 shows an electron micrograph of Sample f (magnification: 3000X).

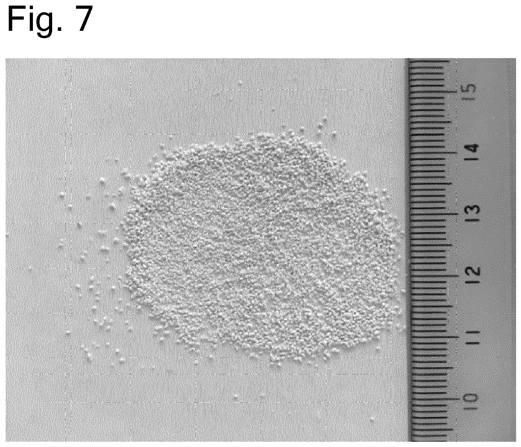

Fig. 7 is a photograph showing the appearance of Sample 1 in Experiment 2.

### DESCRIPTION OF EMBODIMENTS

The present invention relates to granules according to the claims containing a complex fiber of a fiber with inorganic particles. The term granule refers to a particle generally having a larger particle size than that of powder, i.e., a particle size of 0.1 mm or more. The granules of a complex fiber according to the present invention can be obtained by, for example, compacting a powder to form relatively large particles, and optionally adjusting the water content (or solids content) by drying or wetting, as appropriate. In cases where a complex fiber of a fiber with inorganic particles is obtained at high water content, the complex fiber may be dried and formed into relatively large particles to prepare granules. Granules have the advantages that, unlike powders, they may not generate dust or may not form a gel less likely to dissolve when water is added and that they can be dispersed into other products more readily than complex fibers in the form of an aqueous suspension or pulp.

The dryer used for drying the synthesized complex fiber of a fiber with inorganic particles is not specifically limited, and air-flow dryers, band dryers, spray dryers, vacuum dryers, cold dryers, rotary dryers, ProShear mixers, ovens and the like can be conveniently used, for example. Among them, apparatuses capable of performing drying and granulation in parallel such as ProShear mixers are preferably used because they allow granules having a desired particle size to be readily prepared from complex fibers. In the present invention, the complex fiber may be granulated after it has been comminuted.

Wetting can be performed by dropping a liquid from a dedicated line or a line provided as desired. The liquid used for wetting can be prepared as appropriate for intended purposes, including water (industrial water, common tap water, distilled water, ultrapure water), solutions containing dissolved metal ions, dispersions of starch or CMC, solutions containing anionic, cationic or nonionic chemicals, and the like.

In the present invention, the granules have a particle size of 0.1 mm or more and 10 mm or less. The particle size of the granules is preferably 0.2 mm or more and 4 mm or less, more preferably 0.3 mm or more and 3 mm or less, and the particle size of the granules can also be 0.5 mm or more and 2 mm or less. If the particle size is too small, the granules are more likely to scatter, but if the particle size is too large, they are hard to disperse in other materials when they are incorporated into them.

The water content (moisture content) before granulation can be, for example, 0 to 80 %, but preferably 2 to 70 %, more preferably 4 to 60 %, especially preferably 6 to 50 %. If the moisture content before granulation is too high, a long period is required for drying and the efficiency decreases, but if the moisture content before granulation is too low, it will be difficult to uniformly disperse the material by some apparatuses used for processing it into granules, and therefore, moderate moisture contents are suitable for the preparation of granules.

The water content of the granules of the present invention is less than 60 %, and in preferred embodiments, the water content of the granules is less than 45 % or may be less than 30 %. The flowability of the granules can be improved by adjusting the granules to a low water content.

The granules of the present invention are excellent in flowability so that they are easy to handle. In preferred embodiments, the granules of the present invention have an angle of repose of 30 to 58°, more preferably 32 to 50°, especially preferably 34 to 40°. Granules having a small angle of repose can be obtained by adjusting the granules to a low water content or controlling the particle size of the granules.

### Synthesis of complex fibers

In the present invention, complex fibers can be synthesized by synthesizing inorganic particles in a solution containing a cellulose fiber. This is because the surface of the fiber provides a suitable site where the inorganic particles are precipitated, thus facilitating the synthesis of complex fibers. Processes for synthesizing the complex fibers may comprise stirring/mixing a solution containing a fiber and precursors of inorganic particles in an open reaction vessel to synthesize a complex or injecting an aqueous suspension containing a fiber and precursors of inorganic particles into a reaction vessel to synthesize a complex. As described below, inorganic particles may be synthesized in the presence of cavitation bubbles generated during the injection of an aqueous suspension of a precursor of an inorganic material into a reaction vessel. Inorganic particles can be synthesized on the cellulose fiber by a known reaction in either case.

Generally, inorganic particles are known to be produced through the process of: clustering (repeated association and dissociation of a small number of atoms or molecules), nucleation (transition from a cluster to a stable aggregate in which associated atoms or molecules no longer dissociate when the cluster exceeds a critical size), and growth (capturing of additional atoms or molecules by a nucleus to form a larger particle), and it is said that nucleation is more likely to occur when the concentration of the raw material or the reaction temperature is higher. The complex fibers of the present invention comprising a cellulose fiber strongly covered by inorganic particles on its surface can be obtained primarily by controlling the concentrations of the raw materials, the beating degree (specific surface area) of pulp, the viscosity of the solution containing the fiber, the concentrations and feed rates of chemicals added, the reaction temperature, and the stirring speed so that nuclei are efficiently bound onto the fiber and that particle growth is promoted.

In the present invention, a liquid may be injected under conditions where cavitation bubbles are generated in a reaction vessel or a liquid may be injected under conditions where cavitation bubbles are not generated. The reaction vessel is preferably a pressure vessel in either case. As used herein, the term "pressure vessel" refers to a vessel that can withstand a pressure of 0.005 MPa or more. Under conditions where cavitation bubbles are not generated, the pressure in the pressure vessel is preferably 0.005 MPa or more and 0.9 MPa or less expressed in static pressure.

### (Cavitation bubbles)

For synthesizing the complex fibers of the present invention, inorganic particles can be precipitated in the presence of cavitation bubbles. As used herein, the term "cavitation" refers to a physical phenomenon in which bubbles are generated and disappear in the flow of a fluid in a short time due to a pressure difference. The bubbles generated by cavitation (cavitation bubbles) develop from very small "bubble nuclei" of 100 µm or less present in a liquid when the pressure drops below the saturated vapor pressure in the fluid only for a very short time.

In the present invention, cavitation bubbles can be generated in a reaction vessel by a known method. For example, it is possible to generate cavitation bubbles by injecting a fluid under high pressure, or by stirring at high speed in a fluid, or by causing an explosion in a fluid, or by using an ultrasonic vibrator (vibratory cavitation) or the like.

In the present invention, the reaction solution of raw materials or the like can be directly used as a jet liquid to generate cavitation, or some fluid can be injected into the reaction vessel to generate cavitation bubbles. The fluid forming a liquid jet may be any of a liquid, a gas, or a solid such as a powder or pulp or a mixture thereof so far as it is in a flowing state. Moreover, another fluid such as carbonic acid gas can be added as an additional fluid to the fluid described above, if desired. The fluid described above and the additional fluid may be injected as a homogeneous mixture or may be injected separately.

The liquid jet refers to a jet of a liquid or a fluid containing solid particles or a gas dispersed or mixed in a liquid, such as a liquid jet containing a pulp or a raw material slurry of inorganic particles or bubbles. The gas referred to here may contain bubbles generated by cavitation.

The flow rate and pressure are especially important for cavitation because it occurs when a liquid is accelerated and a local pressure drops below the vapor pressure of the liquid. Therefore, the cavitation number σ, which is a fundamental dimensionless number representing a cavitation state, is desirably 0.001 or more and 0.5 or less, preferably 0.003 or more and 0.2 or less, especially preferably 0.01 or more and 0.1 or less. If the cavitation number σ is less than 0.001, little benefit is obtained because the pressure difference from the surroundings is small when cavitation bubbles collapse, but if it is greater than 0.5, the pressure difference in the flow is too small to generate cavitation.

When cavitation is generated by emitting a jetting liquid through a nozzle or an orifice tube, the pressure of the jetting liquid (upstream pressure) is desirably 0.01 MPa or more and 30 MPa or less, preferably 0.7 MPa or more and 20 MPa or less, more preferably 2 MPa or more and 15 MPa or less. If the upstream pressure is less than 0.01 MPa, little benefit is obtained because a pressure difference is less likely to occur from the downstream pressure. If the upstream pressure is higher than 30 MPa, a special pump and pressure vessel are required and energy consumption increases, leading to cost disadvantages. On the other hand, the pressure in the vessel (downstream pressure) is preferably 0.005 MPa or more and 0.9 MPa or less expressed in static pressure. Further, the ratio between the pressure in the vessel and the pressure of the jetting liquid is preferably in the range of 0.001 to 0.5.

In the present invention, inorganic particles can also be synthesized by injecting a jetting liquid under conditions where cavitation bubbles are not generated. Specifically, the pressure of the jetting liquid (upstream pressure) is controlled at 2 MPa or less, preferably 1 MPa or less, while the pressure of the jetting liquid (downstream pressure) is released, more preferably 0.05 MPa or less.

The jet flow rate of the jetting liquid is desirably in the range of 1 m/sec or more and 200 m/sec or less, preferably in the range of 20 m/sec or more and 100 m/sec or less. If the jet flow rate is less than 1 m/sec, little benefit is obtained because the pressure drop is too small to generate cavitation. If it is greater than 200 m/sec, however, special equipment is required to generate high pressure, leading to cost disadvantages.

In the present invention, cavitation may be generated in the reaction vessel where inorganic particles are synthesized. The process can be run in one-pass mode, or can be run through a necessary number of cycles. Further, the process can be run in parallel or in series using multiple generating means.

Liquid injection for generating cavitation may take place in a vessel open to the atmosphere, but preferably takes place within a pressure vessel to control the cavitation.

When cavitation is generated by liquid injection, the solids content of the reaction solution is preferably 30 % by weight or less, more preferably 20 % by weight or less. This is because cavitation bubbles are more likely to homogeneously act on the reaction system at such levels. On the other hand, the solids content of the aqueous suspension of slaked lime forming the reaction solution is preferably 0.1 % by weight or more to improve the reaction efficiency.

When a complex of calcium carbonate with a cellulose fiber is synthesized in the present invention, for examples, the pH of the reaction solution is basic at the start of the reaction, but changes to neutral as the carbonation reaction proceeds. Thus, the reaction can be controlled by monitoring the pH of the reaction solution.

In the present invention, stronger cavitation can be generated by increasing the jetting pressure of the liquid because the flow rate of the jetting liquid increases and accordingly the pressure decreases. Moreover, the impact force can be stronger by increasing the pressure in the reaction vessel because the pressure in the region where cavitation bubbles collapse increases and the pressure difference between the bubbles and the surroundings increases so that the bubbles vigorously collapse. This also helps to promote the dissolution and dispersion of carbonic acid gas introduced. The reaction temperature is preferably 0 °C or more and 90 °C or less, especially preferably 10 °C or more and 60 °C or less. Given that the impact force is generally thought to be maximal at the midpoint between the melting point and the boiling point, the temperature is suitably around 50 °C in cases of aqueous solutions, though significant effects can be obtained even at a lower temperature so far as it is within the ranges defined above because there is no influence of vapor pressure.

For preparing the complex fibers of the present invention, various known auxiliaries can also be added. For example, chelating agents can be added, specifically including polyhydroxycarboxylic acids such as citric acid, malic acid, and tartaric acid; dicarboxylic acids such as oxalic acid; sugar acids such as gluconic acid; aminopolycarboxylic acids such as iminodiacetic acid and ethylenediaminetetraacetic acid and alkali metal salts thereof; alkali metal salts of polyphosphoric acids such as hexametaphosphoric acid and tripolyphosphoric acid; amino acids such as glutamic acid and aspartic acid and alkali metal salts thereof; ketones such as acetylacetone, methyl acetoacetate and allyl acetoacetate; sugars such as sucrose; and polyols such as sorbitol. Surface-treating agents can also be added, including saturated fatty acids such as palmitic acid and stearic acid; unsaturated fatty acids such as oleic acid and linoleic acid; alicyclic carboxylic acids; resin acids such as abietic acid; as well as salts, esters and ethers thereof; alcoholic activators, sorbitan fatty acid esters, amide- or amine-based surfactants, polyoxyalkylene alkyl ethers, polyoxyethylene nonyl phenyl ether, sodium alpha-olefin sulfonate, long-chain alkylamino acids, amine oxides, alkylamines, quaternary ammonium salts, aminocarboxylic acids, phosphonic acids, polycarboxylic acids, condensed phosphoric acids and the like. Further, dispersants can also be used, if desired. Such dispersants include, for example, sodium polyacrylate, sucrose fatty acid esters, glycerin fatty acid esters, ammonium salts of acrylic acid-maleic acid copolymers, methacrylic acid-naphthoxypolyethylene glycol acrylate copolymers, ammonium salts of methacrylic acid-polyethylene glycol monomethacrylate copolymers, polyethylene glycol monoacrylate and the like. These can be used alone or in combination. They may be added before or after the synthesis reaction. Such additives can be added preferably in an amount of 0.001 to 20 %, more preferably 0.1 to 10 % of inorganic particles. Further in the present invention, the reaction can be a batch reaction or a continuous reaction. Typically, the reaction is preferably performed by a batch reaction process because of the convenience in removing residues after the reaction. The scale of the reaction is not specifically limited, and can be 100 L or less, or more than 100 L. The volume of the reaction vessel can be, for example, in the order of 10 L to 100 L, or may be in the order of 100 L to 1000 L.

Furthermore, the reaction can be controlled by the electrical conductivity of the reaction solution or the reaction period, and specifically it can be controlled by adjusting the period during which the reactants stay in the reaction vessel. In the present invention, the reaction can also be controlled by stirring the reaction solution in the reaction vessel or performing the reaction as a multistage reaction.

In the present invention, the reaction product complex fiber is obtained as a suspension so that it can be stored in a storage tank or subjected to further processes such as concentration, dehydration, grinding, classification, aging, or dispersion, as appropriate. These can be accomplished by known processes, which may be appropriately selected taking into account the purpose, energy efficiency and the like. For example, the concentration/dehydration process is performed by using a centrifugal dehydrator, thickener or the like. Examples of such centrifugal dehydrators include decanters, screw decanters and the like. If a filter or dehydrator is used, the type of it is not specifically limited either, and those commonly used can be used, including, for example, pressure dehydrators such as filter presses, drum filters, belt presses and tube presses; or vacuum drum filters such as Oliver filters or the like, which can be conveniently used to give a calcium carbonate cake. Grinding means include ball mills, sand grinder mills, impact mills, high pressure homogenizers, low pressure homogenizers, Dyno mills, ultrasonic mills, Kanda grinders, attritors, millstone type mills, vibration mills, cutter mills, jet mills, breakers, beaters, single screw extruders, twin screw extruders, ultrasonic stirrers, juicers/mixers for home use, etc. Classification means include sieves such as meshes, outward or inward flow slotted or round-hole screens, vibrating screens, heavyweight contaminant cleaners, lightweight contaminant cleaners, reverse cleaners, screening testers and the like. Dispersion means include high speed dispersers, low speed kneaders and the like.

The complex fibers in the present invention can be compounded into fillers or pigments as a suspension without being completely dehydrated, or can be dried into powder. The dryer used in the latter case is not specifically limited either, and air-flow dryers, band dryers, spray dryers and the like can be conveniently used, for example.

The complex fibers of the present invention can be modified by known methods. In one embodiment, for example, they can be hydrophobized on their surface to enhance the miscibility with resins or the like.

In the present invention, water is used for preparing suspensions or for other purposes, in which case not only common tap water, industrial water, groundwater, well water and the like can be used, but also ion-exchanged water, distilled water, ultrapure water, industrial waste water, and the water obtained during the separation/dehydration of the reaction solution can be conveniently used.

Further in the present invention, the reaction solution in the reaction vessel can be used in circulation. Thus, the reaction efficiency increases and a desired complex of inorganic particles with a fiber can be readily obtained by circulating the reaction solution to promote stirring of the solution.

### Inorganic particles

In the present invention, the inorganic particles to be complexed with a fiber comprise a metal salt of calcium, magnesium, barium or aluminum, or metal particles containing titanium, copper or zinc, or a silicate. The inorganic particles are preferably insoluble or slightly soluble in water because the inorganic particles are sometimes synthesized in an aqueous system or the fiber complexes are sometimes used in an aqueous system.

As used herein, the term "inorganic particles" refers to a compound of a metal element or a non-metal element. Further, the compound of a metal element refers to the so-called inorganic salt formed by an ionic bond between a metal cation (e.g., Na⁺, Ca²⁺, Mg²⁺, Al³⁺, Ba²⁺ or the like) and an anion (e.g., O²⁻, OH⁻, CO₃²⁻, PO₄³⁻, SO₄²⁻, NO₃⁻, Si₂O₃²⁻, SiO₃²⁻, Cl⁻, F⁻, S²⁻ or the like). The compound of a non-metal element includes, for example, a silicate (SiO₂) or the like. In the present invention, the inorganic particles comprise a metal salt of calcium, magnesium or barium, or a silicate, or a metal salt of aluminum, or metal particles containing titanium, copper, silver, or zinc.

These inorganic particles can be synthesized by a known method, which may be either a gas-liquid or liquid-liquid method. An example of gas-liquid methods is the carbonation process, according to which magnesium carbonate can be synthesized by reacting magnesium hydroxide and carbonic acid gas, for example. Examples of liquid-liquid methods include the reaction between an acid (e.g., hydrochloric acid, sulfuric acid or the like) and a base (e.g., sodium hydroxide, potassium hydroxide or the like) by neutralization; the reaction between an inorganic salt and an acid or a base; and the reaction between inorganic salts. For example, barium sulfate can be obtained by reacting barium hydroxide and sulfuric acid, or aluminum hydroxide can be obtained by reacting aluminum sulfate and sodium hydroxide, or composite inorganic particles of calcium and aluminum can be obtained by reacting calcium carbonate and aluminum sulfate. Such syntheses of inorganic particles can be performed in the presence of any metal or non-metal compound in the reaction solution, in which case the metal or non-metal compound is efficiently incorporated into the inorganic particles so that it can form a composite with them. For example, composite particles of calcium phosphate and titanium can be obtained by adding phosphoric acid to calcium carbonate to synthesize calcium phosphate in the presence of titanium dioxide in the reaction solution.

### (Calcium carbonate)

Calcium carbonate can be synthesized by, for example, the carbonation process, the soluble salt reaction process, the lime-soda process, the soda process or the like, and in preferred embodiments, calcium carbonate is synthesized by the carbonation process.

Typically, the preparation of calcium carbonate by the carbonation process involves using lime as a calcium source to synthesize calcium carbonate via a slaking step in which water is added to quick lime CaO to give slaked lime Ca(OH)₂ and a carbonation step in which carbonic acid gas CO₂ is injected into the slaked lime to give calcium carbonate CaCO₃. During then, the suspension of slaked lime prepared by adding water to quick lime may be passed through a screen to remove less soluble lime particles contained in the suspension. Alternatively, slaked lime may be used directly as a calcium source. In cases where calcium carbonate is synthesized by the carbonation process in the present invention, the carbonation reaction may be performed in the presence of cavitation bubbles.

In cases where calcium carbonate is synthesized by the carbonation process, the aqueous suspension of slaked lime preferably has a solids content in the order of 0.1 to 40 % by weight, more preferably 0.5 to 30 % by weight, still more preferably 1 to 20 % by weight. If the solids content is low, the reaction efficiency decreases and the production cost increases, but if the solids content is too high, the flowability decreases and the reaction efficiency decreases. In the present invention, calcium carbonate is synthesized in the presence of cavitation bubbles, whereby the reaction solution and carbonic acid gas can be well mixed even if a suspension (slurry) having a high solids content is used.

Aqueous suspensions containing slaked lime that can be used include those commonly used for the synthesis of calcium carbonate, and can be prepared by, for example, mixing slaked lime with water or by slaking (digesting) quick lime (calcium oxide) with water. The slaking conditions include, but not specifically limited to, a CaO concentration of 0.05 % by weight or more, preferably 1 % by weight or more, and a temperature of 20 to 100 °C, preferably 30 to 100 °C, for example. Further, the average residence time in the slaking reactor (slaker) is not specifically limited either, but can be, for example, 5 minutes to 5 hours, and preferably within 2 hours. It should be understood that the slaker may be batch or continuous. It should be noted that, in the present invention, the carbonation reactor (carbonator) and the slaking reactor (slaker) may be provided separately, or one reactor may serve as both carbonation reactor and slaking reactor.

In the synthesis of calcium carbonate, the nucleation reaction proceeds more readily when the concentrations of the raw materials (Ca ions, CO₃ ions) in the reaction solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which calcium carbonate has been strongly bound. Specifically, this can be accomplished by optimizing the concentration of Ca ions and the pulp consistency and reducing the feed rate of CO₂ per unit time. For example, the concentration of Ca ions in the reaction vessel is preferably 0.01 mol/L or more and less than 0.20 mol/L. If it is less than 0.01 mol/L, the reaction does not readily proceed, but if it is 0.20 mol/L or more, free inorganic particles are more likely to be synthesized in the suspension. The pulp consistency is preferably 0.5 % or more and less than 4.0 %. If it is less than 0.5 %, the reaction does not readily proceed because the frequency with which the raw materials collide with fibers decreases, but if it is 4.0 % or more, homogeneous complexes cannot be obtained due to insufficient stirring. The feed rate of CO₂ per unit time is desirably 0.001 mol/min or more and less than 0.060 mol/min per liter of the reaction solution. If it is less than 0.001 mol/min, the reaction does not readily proceed, but if it is 0.060 mol/min or more, free inorganic particles are more likely to be synthesized in the suspension.

### (Magnesium carbonate)

Magnesium carbonate can be synthesized by a known method. For example, basic magnesium carbonate can be synthesized via normal magnesium carbonate from magnesium bicarbonate, which is synthesized from magnesium hydroxide and carbonic acid gas. Magnesium carbonate can be obtained in various forms such as magnesium bicarbonate, normal magnesium carbonate, basic magnesium carbonate and the like depending on the synthesis method, among which basic magnesium carbonate is especially preferred as magnesium carbonate forming part of the fiber complexes of the present invention. This is because magnesium bicarbonate is relatively unstable, while normal magnesium carbonate consists of columnar (needle-like) crystals that may be less likely to adhere to fibers. However, a fiber complex of magnesium carbonate with a fiber in which the surface of the fiber is covered in a fish scale-like pattern can be obtained if the chemical reaction is allowed to proceed in the presence of the fiber until basic magnesium carbonate is formed.

Further in the present invention, the reaction solution in the reaction vessel can be used in circulation. Thus, the reaction efficiency increases and desired inorganic particles can be readily obtained by circulating the reaction solution to increase contacts between the reaction solution and carbonic acid gas.

In the present invention, a gas such as carbon dioxide (carbonic acid gas) is injected into the reaction vessel where it can be mixed with the reaction solution. According to the present invention, the reaction can be performed with good efficiency because carbonic acid gas can be supplied to the reaction solution without using any gas feeder such as a fan, blower or the like and the carbonic acid gas is finely dispersed by cavitation bubbles.

In the present invention, the concentration of carbon dioxide in the gas containing carbon dioxide is not specifically limited, but the concentration of carbon dioxide is preferably higher. Further, the amount of carbonic acid gas introduced into the injector is not limited and can be selected as appropriate.

The gas containing carbon dioxide of the present invention may be substantially pure carbon dioxide gas or a mixture with another gas. For example, a gas containing an inert gas such as air or nitrogen in addition to carbon dioxide gas can be used as the gas containing carbon dioxide. Gases containing carbon dioxide other than carbon dioxide gas (carbonic acid gas) that can be conveniently used include exhaust gases discharged from incinerators, coal-fired boilers, heavy oil-fired boilers and the like in papermaking factories. Alternatively, the carbonation reaction can also be performed using carbon dioxide emitted from the lime calcination process.

In the synthesis of magnesium carbonate, the nucleation reaction proceeds more readily when the concentrations of the raw materials (Mg ions, CO₃ ions) in the reaction solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which magnesium carbonate has been strongly bound. Specifically, this can be accomplished by optimizing the concentration of Mg ions and the pulp consistency and reducing the feed rate of CO₂ per unit time. For example, the concentration of Mg ions in the reaction vessel is preferably 0.0001 mol/L or more and less than 0.20 mol/L. If it is less than 0.0001 mol/L, the reaction does not readily proceed, but if it is 0.20 mol/L or more, free inorganic particles are more likely to be synthesized in the suspension. The pulp consistency is preferably 0.5 % or more and less than 4.0 %. If it is less than 0.5 %, the reaction does not readily proceed because the frequency with which the raw materials collide with fibers decreases, but if it is 4.0 % or more, homogeneous complexes cannot be obtained due to insufficient stirring. The feed rate of CO₂ per unit time is desirably 0.001 mol/min or more and less than 0.060 mol/min per liter of the reaction solution. If it is less than 0.001 mol/min, the reaction does not readily proceed, but if it is 0.060 mol/min or more, free inorganic particles are more likely to be synthesized in the suspension.

### (Barium sulfate)

Barium sulfate is a crystalline ionic compound represented by the formula BaSO₄ and composed of barium ions and sulfate ions, and often assumes a plate-like or columnar form and is poorly soluble in water. Pure barium sulfate occurs as colorless crystals, but turns yellowish brown or black gray and translucent when it contains impurities such as iron, manganese, strontium, calcium or the like. It occurs as a natural mineral or can be synthesized by chemical reaction. Especially, synthetic products obtained by chemical reaction are not only used for medical purposes (as radiocontrast agents) but also widely used for paints, plastics, storage batteries and the like by taking advantage of their chemical stability.

In the present invention, complexes of barium sulfate with a fiber can be prepared by synthesizing barium sulfate in a solution in the presence of the fiber. For example, possible methods include the reaction between an acid (e.g., sulfuric acid or the like) and a base by neutralization; the reaction between an inorganic salt and an acid or a base; and the reaction between inorganic salts. For example, barium sulfate can be obtained by reacting barium hydroxide and sulfuric acid or aluminum sulfate, or barium sulfate can be precipitated by adding barium chloride into an aqueous solution containing a sulfate.

In the synthesis of barium sulfate, the nucleation reaction proceeds more readily when the concentrations of the raw materials (Ba ions, SO₄ ions) in the solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which barium sulfate has been strongly bound. Specifically, this can be accomplished by optimizing the concentration of Ba ions and the pulp consistency and reducing the feed rate of SO₄ ions per unit time. For example, the concentration of Ba ions in the reaction vessel is preferably 0.01 mol/L or more and less than 0.20 mol/L. If it is less than 0.01 mol/L, the reaction does not readily proceed, but if it is 0.20 mol/L or more, free inorganic particles are more likely to be synthesized in the suspension. The pulp consistency is preferably 0.5 % or more and less than 4.0 %. If it is less than 0.5 %, the reaction does not readily proceed because the frequency with which the raw materials collide with fibers decreases, but if it is 4.0 % or more, homogeneous complexes cannot be obtained due to insufficient stirring. The feed rate of SO₄ ions per unit time is desirably 0.005 mol/min or more and less than 0.080 mol/min per liter of the reaction solution. If it is less than 0.001 mol/min, the reaction does not readily proceed, but if it is 0.080 mol/min or more, free inorganic particles are more likely to be synthesized in the suspension

### (Hydrotalcite)

Hydrotalcite can be synthesized by a known method. For example, hydrotalcite is synthesized via a co-precipitation reaction at controlled temperature, pH and the like by immersing a fiber in an aqueous carbonate solution containing carbonate ions forming interlayers and an alkaline solution (sodium hydroxide or the like) in a reaction vessel, and then adding an acid solution (an aqueous metal salt solution containing divalent metal ions and trivalent metal ions forming host layers). Alternatively, hydrotalcite can also be synthesized via a co-precipitation reaction at controlled temperature, pH and the like by immersing a fiber in an acid solution (an aqueous metal salt solution containing divalent metal ions and trivalent metal ions forming host layers) in a reaction vessel, and then adding dropwise an aqueous carbonate solution containing carbonate ions forming interlayers and an alkaline solution (sodium hydroxide or the like). The reaction typically takes place at ordinary pressure, though a process involving a hydrothermal reaction using an autoclave or the like has also been proposed (JPA 1985-6619).

In the present invention, chlorides, sulfides, nitrates and sulfates of magnesium, zinc, barium, calcium, iron, copper, cobalt, nickel, and manganese can be used as sources of divalent metal ions forming host layers. On the other hand, chlorides, sulfides, nitrates and sulfates of aluminum, iron, chromium and gallium can be used as sources of trivalent metal ions forming host layers.

In the present invention, carbonate ions, nitrate ions, chloride ions, sulfate ions, phosphate ions and the like can be used as interlayer anions. Sodium carbonate is used as a source of carbonate ions, when they are used as interlayer anions. However, sodium carbonate can be replaced by a gas containing carbon dioxide (carbonic acid gas) such as substantially pure carbon dioxide gas or a mixture with another gas. For example, gases containing carbon dioxide that can be conveniently used include exhaust gases discharged from incinerators, coal-fired boilers, heavy oil-fired boilers and the like in papermaking factories. Alternatively, the carbonation reaction can also be performed using carbon dioxide emitted from the lime calcination process.

In the synthesis of hydrotalcite, the nucleation reaction proceeds more readily when the concentrations of the raw materials (metal ions forming host layers, CO₃ ions and the like) in the solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which hydrotalcite has been strongly bound. Specifically, this can be accomplished by optimizing the concentration of CO₃ ions and the pulp consistency and reducing the feed rate of metal ions per unit time. For example, the concentration of CO₃ ions in the reaction vessel is preferably 0.01 mol/L or more and less than 0.80 mol/L. If it is less than 0.01 mol/L, the reaction does not readily proceed, but if it is 0.80 mol/L or more, free inorganic particles are more likely to be synthesized in the suspension. The pulp consistency is preferably 0.5 % or more and less than 4.0 %. If it is less than 0.5 %, the reaction does not readily proceed because the frequency with which the raw materials collide with fibers decreases, but if it is 4.0 % or more, homogeneous complexes cannot be obtained due to insufficient stirring. The feed rate of metal ions per unit time is desirably 0.001 mol/min or more and less than 0.010 mol/min, more desirably 0.001 mol/min or more and less than 0.005 mol/min per liter of the reaction solution in the case of Mg ions, for example, though it depends on the type of metal. If it is less than 0.001 mol/min, the reaction does not readily proceed, but if it is 0.010 mol/min or more, free inorganic particles are more likely to be synthesized in the suspension.

### (Alumina/silica)

Alumina and/or silica can be synthesized by a known method. When any one or more of an inorganic acid or an aluminum salt is used as a starting material of the reaction, the synthesis is accomplished by adding an alkali silicate. The synthesis can also be accomplished by using an alkali silicate as a starting material and adding any one or more of an inorganic acid or an aluminum salt, but the product adheres better to fibers when an inorganic acid and/or aluminum salt is used as a starting material. Inorganic acids that can be used include, but not specifically limited to, sulfuric acid, hydrochloric acid, nitric acid or the like, for example. Among them, sulfuric acid is especially preferred in terms of cost and handling. Aluminum salts include aluminum sulfate, aluminum chloride, aluminum polychloride, alum, potassium alum and the like, among which aluminum sulfate can be conveniently used. Alkali silicates include sodium silicate or potassium silicate or the like, among which sodium silicate is preferred because of easy availability. The molar ratio between silicate and alkali is not limited, but commercial products having an approximate molar ratio of SiO₂ : Na₂O = 3 to 3.4:1 commonly distributed as sodium silicate J3 can be conveniently used.

In the present invention, complex fibers comprising silica and/or alumina deposited on the surface of a fiber are prepared preferably by synthesizing silica and/or alumina on the fiber while maintaining the pH of the reaction solution containing the fiber at 4.6 or less. The reason why this results in complex fibers covered well on the fiber surface is not known in complete detail, but it is believed that complex fibers with high coverage ratio and adhesion ratio can be obtained because trivalent aluminum ions are formed at a high degree of ionization by maintaining a low pH.

In the synthesis of silica and/or alumina, the nucleation reaction proceeds more readily when the concentrations of the raw materials (silicate ions, aluminum ions) in the reaction solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which silica and/or alumina has been strongly bound. Specifically, this can be accomplished by optimizing the pulp consistency and reducing the feed rate of silicate ions and aluminum ions added per unit time. For example, the pulp consistency is preferably 0.5 % or more and less than 4.0 %. If it is less than 0.5 %, the reaction does not readily proceed because the frequency with which the raw materials collide with fibers decreases, but if it is 4.0 % or more, homogeneous complexes cannot be obtained due to insufficient stirring. The feed rate of silicate ions and aluminum ions added per unit time is desirably 0.001 mol/min or more, more desirably 0.01 mol/min or more per liter of the reaction solution, and it is desirably less than 0.5 mol/min, more desirably less than 0.050 mol/min in the case of aluminum ions, for example. If it is less than 0.001 mol/min, the reaction does not readily proceed, but if it is 0.050 mol/min or more, free inorganic particles are more likely to be synthesized in the suspension.

In one preferred embodiment, the average primary particle size of the inorganic particles in the complex fibers of the present invention can be, for example, 1.5 µm or less, or the average primary particle size can be 1200 nm or less, or 900 nm or less, or the average primary particle size can be even 200 nm or less, or 150 nm or less. On the other hand, the average primary particle size of the inorganic particles can be 10 nm or more. It should be noted that the average primary particle size can be determined from electron micrographs.

### (Aluminum hydroxide)

Aluminum hydroxide is a crystalline ionic compound represented by the formula Al(OH)₃ and composed of aluminum ions and hydroxide ions, and often assumes a particulate form and is poorly soluble in water. Synthetic products obtained by chemical reaction are not only used for pharmaceuticals and adsorbents but also used for flame retardants or fire retardants by taking advantage of their property of releasing water when heated.

In the present invention, complexes of aluminum hydroxide with a fiber can be prepared by synthesizing aluminum hydroxide in a solution in the presence of the fiber. For example, possible methods include the reaction between an acid (e.g., sulfuric acid or the like) and a base by neutralization; the reaction between an inorganic salt and an acid or a base; and the reaction between inorganic salts. For example, aluminum hydroxide can be obtained by reacting sodium hydroxide and aluminum sulfate, or aluminum hydroxide can be precipitated by adding aluminum chloride into an aqueous solution containing an alkali salt.

In the synthesis of aluminum hydroxide, the nucleation reaction proceeds more readily when the concentrations of the raw materials (Ak ions, OH ions) in the solution are higher and the temperature is higher, but nuclei are less likely to adhere to cellulose fibers and free inorganic particles are more likely to be synthesized in the suspension under such conditions when complex fibers are prepared. Thus, the nucleation reaction must be suitably controlled if one desires to prepare a complex fiber in which aluminum hydroxide has been strongly bound. Specifically, this can be accomplished by optimizing the concentration of OH ions and the pulp consistency and reducing the feed rate of Al ions added per unit time. For example, the concentration of OH ions in the reaction vessel is preferably 0.01 mol/L or more and less than 0.50 mol/L. If it is less than 0.01 mol/L, the reaction does not readily proceed, but if it is 0.50 mol/L or more, free inorganic particles are more likely to be synthesized in the suspension. The pulp consistency is preferably 0.5 % or more and less than 4.0 %. If it is less than 0.5 %, the reaction does not readily proceed because the frequency with which the raw materials collide with fibers decreases, but if it is 4.0 % or more, homogeneous complexes cannot be obtained due to insufficient stirring. The feed rate of Al ions added per unit time is desirably 0.001 mol/min or more and less than 0.050 mol/min per liter of the reaction solution. If it is less than 0.001 mol/min, the reaction does not readily proceed, but if it is 0.050 mol/min or more, free inorganic particles are more likely to be synthesized in the suspension.

### Fibers

The complex fibers used in the present invention comprise a cellulose fiber complexed with inorganic particles. Examples of cellulose fibers forming part of the complexes that can be used include, without limitation, not only natural cellulose fibers but also regenerated fibers (semisynthetic fibers) such as rayon and lyocell and synthetic fibers and the like. Examples of raw materials of cellulose fibers include pulp fibers (wood pulps and non-wood pulps), cellulose nanofibers, bacterial celluloses, animal-derived celluloses such as Ascidiacea, algae, etc., among which wood pulps may be prepared by pulping wood raw materials. Examples of wood raw materials include softwoods such as Pinus densiflora, Pinus thunbergii, Abies sachalinensis, Piceajezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and mixed materials thereof; and hardwoods such as Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and mixed materials thereof.

The technique for pulping the wood raw materials (woody raw materials) is not specifically limited, and examples include pulping processes commonly used in the papermaking industry. Wood pulps can be classified by the pulping process and include, for example, chemical pulps obtained by digestion via the kraft process, sulfite process, soda process, polysulfide process or the like; mechanical pulps obtained by pulping with a mechanical force such as a refiner, grinder or the like; semichemical pulps obtained by pulping with a mechanical force after a chemical pretreatment; waste paper pulps; deinked pulps and the like. The wood pulps may have been unbleached (before bleaching) or bleached (after bleaching).

Examples of non-wood pulps include cotton, hemp, sisal (Agave sisalana), abaca (Musa textilis), flax, straw, bamboo, bagas, kenaf, sugar cane, corn, rice straw, Broussonetia kazinoki × B. papyrifera, Edgeworthia chrysantha and the like.

The pulp fibers may be unbeaten or beaten, and may be chosen depending on the desired properties of complex sheets to be formed therefrom, but they are preferably beaten. This can be expected to improve the sheet strength and to promote the adhesion of inorganic particles.

Moreover, these cellulosic raw materials can be further treated, whereby they can also be used as powdered celluloses, chemically modified celluloses such as oxidized celluloses, and cellulose nanofibers (CNFs) (microfibrillated celluloses (MFCs), TEMPO-oxidized CNFs, phosphate esters of CNFs, carboxymethylated CNFs, mechanically ground CNFs and the like). Powdered celluloses used in the present invention may be, for example, rod-like crystalline cellulose powders having a defined particle size distribution prepared by purifying/drying and grinding/sieving the undecomposed residue obtained after acid hydrolysis of an accepted pulp fraction, or may be commercially available as KC FLOCK (from Nippon Paper Industries Co., Ltd.), CEOLUS (from Asahi Kasei Chemicals Corp.), AVICEL (from FMC Corporation) and the like. The degree of polymerization of celluloses in the powdered celluloses is preferably in the order of 100 to 1500, and the powdered celluloses preferably have a crystallinity of 70 to 90 % as determined by X-ray diffraction and also preferably have a volume average particle size of 500 nm or more and 100 µm or less as determined by a laser diffraction particle size distribution analyzer.

Oxidized celluloses used in the present invention can be obtained by oxidation with an oxidizing agent in water in the presence of an N-oxyl compound and a compound selected from the group consisting of a bromide, an iodide or a mixture thereof, for example. Cellulose nanofibers can be obtained by disintegrating the cellulosic raw materials described above. Disintegration methods that can be used include, for example, mechanically grinding or beating an aqueous suspension or the like of a cellulose or a chemically modified cellulose such as an oxidized cellulose using a refiner, high pressure homogenizer, grinder, single screw or multi-screw kneader, bead mill or the like. Cellulose nanofibers may be prepared by using one or a combination of the methods described above. The fiber diameter of the cellulose nanofibers prepared can be determined by electron microscopic observation or the like and preferably falls within the range of, for example, 5 nm to 300 nm. During the preparation of the cellulose nanofibers, a given compound can be further added before and/or after the celluloses are disintegrated and/or micronized, whereby it reacts with the cellulose nanofibers to functionalize their hydroxyl groups. Functional groups used for the functionalization include acyl groups such as acetyl, ester, ether, ketone, formyl, benzoyl, acetal, hemiacetal, oxime, isonitrile, allene, thiol, urea, cyano, nitro, azo, aryl, aralkyl, amino, amide, imide, acryloyl, methacryloyl, propionyl, propioloyl, butyryl, 2-butyryl, pentanoyl, hexanoyl, heptanoyl, octanoyl, nonanoyl, decanoyl, undecanoyl, dodecanoyl, myristoyl, palmitoyl, stearoyl, pivaloyl, benzoyl, naphthoyl, nicotinoyl, isonicotinoyl, furoyl and cinnamoyl; isocyanate groups such as 2-methacryloyloxyethyl isocyanate; alkyl groups such as methyl, ethyl, propyl, 2-propyl, butyl, 2-butyl, tert-butyl, pentyl, hexyl, heptyl, octyl, nonyl, decyl, undecyl, dodecyl, myristyl, palmityl, and stearyl; oxirane, oxetane, oxyl, thiirane, thietane and the like. Hydrogens in these substituents may be substituted by a functional group such as hydroxyl or carboxyl. Further, the alkyl groups may partially contain an unsaturated bond. Compounds used for introducing these functional groups are not specifically limited and include, for example, compounds containing phosphate-derived groups, compounds containing carboxylate-derived groups, compounds containing sulfate-derived groups, compounds containing sulfonate-derived groups, compounds containing alkyl groups, compounds containing amine-derived groups and the like. Phosphate-containing compounds include, but not specifically limited to, phosphoric acid and lithium salts of phosphoric acid such as lithium dihydrogen phosphate, dilithium hydrogen phosphate, trilithium phosphate, lithium pyrophosphate, and lithium polyphosphate. Other examples include sodium salts of phosphoric acid such as sodium dihydrogen phosphate, disodium hydrogen phosphate, trisodium phosphate, sodium pyrophosphate, and sodium polyphosphate. Further examples include potassium salts of phosphoric acid such as potassium dihydrogen phosphate, dipotassium hydrogen phosphate, tripotassium phosphate, potassium pyrophosphate, and potassium polyphosphate. Still further examples include ammonium salts of phosphoric acid such as ammonium dihydrogen phosphate, diammonium hydrogen phosphate, triammonium phosphate, ammonium pyrophosphate, ammonium polyphosphate and the like. Among them, preferred ones include, but not specifically limited to, phosphoric acid, sodium salts of phosphoric acid, potassium salts of phosphoric acid, and ammonium salts of phosphoric acid, and more preferred are sodium dihydrogen phosphate and disodium hydrogen phosphate because they allow phosphate groups to be introduced with high efficiency so that they are convenient for industrial applications. Carboxyl-containing compounds include, but not specifically limited to, dicarboxylic compounds such as maleic acid, succinic acid, phthalic acid, fumaric acid, glutaric acid, adipic acid, and itaconic acid; and tricarboxylic compounds such as citric acid, and aconitic acid. Acid anhydrides of carboxyl-containing compounds include, but not specifically limited to, acid anhydrides of dicarboxylic compounds such as maleic anhydride, succinic anhydride, phthalic anhydride, glutaric anhydride, adipic anhydride, and itaconic anhydride. Derivatives of carboxyl-containing compounds include, but not specifically limited to, imides of acid anhydrides of carboxyl-containing compounds, and derivatives of acid anhydrides of carboxyl-containing compounds. Imides of acid anhydrides of carboxyl-containing compounds include, but not specifically limited to, imides of dicarboxylic compounds such as maleimides, succinimides, and phthalimides. Derivatives of acid anhydrides of carboxyl-containing compounds are not specifically limited. For example, they include acid anhydrides of carboxyl-containing compounds in which hydrogen atoms are at least partially substituted by a substituent (e.g., alkyl, phenyl or the like) such as dimethylmaleic anhydride, diethylmaleic anhydride, and diphenylmaleic anhydride. Among the compounds containing carboxylate-derived groups listed above, preferred ones include, but not specifically limited to, maleic anhydride, succinic anhydride and phthalic anhydride because they are convenient for industrial applications and can be readily gasified. Further, the cellulose nanofibers may be functionalized by a compound physically adsorbed rather than chemically bonded to the cellulose nanofibers. Compounds to be physically adsorbed include surfactants and the like, which may be anionic, cationic, or nonionic. When the celluloses are functionalized as described above before they are disintegrated and/or ground, these functional groups can be removed, giving back the original hydroxyl groups after they are disintegrated and/or ground. The functionalization as described above can promote disintegration into cellulose nanofibers or help cellulose nanofibers to be mixed with various materials during their use.

The fibers shown above may be used alone or as a mixture of two or more of them. For example, fibrous materials collected from waste water of a papermaking factory may be supplied to the carbonation reaction of the present invention. Various composite particles including those of various shapes such as fibrous particles can be synthesized by supplying such materials to the reaction vessel.

In the present invention, materials that are incorporated into the product inorganic particles to form composite particles can be used in addition to a fiber. In the present invention, composite particles incorporating inorganic particles, organic particles, polymers or the like can be prepared by synthesizing inorganic particles in a solution containing these materials in addition to a cellulose fiber such as a pulp fiber.

The fiber length of the fiber to be complexed is not specifically limited, and the average fiber length can be, for example, in the order of 0.1 µm to 15 mm, or may be 1 µm to 12 mm, 100 µm to 10 mm, 400 µm to 8 mm or the like. Especially in the present invention, the average fiber length is preferably 400 µm or more (0.4 mm or more).

The average fiber diameter of the fiber to be complexed is not specifically limited, and the average fiber diameter can be, for example, in the order of 1 nm to 100 µm, or may be 500 nm to 100 µm, 1 µm to 90 µm, 3 µm to 50 µm, 5 µm to 30 µm or the like. Especially in the present invention, the average fiber diameter is preferably 500 nm or more because the production efficiency during post-processes can be improved.

The average fiber length and the average fiber diameter of the fiber can be determined by a fiber length analyzer. The fiber length analyzer includes, for example, Valmet Fractionator (from Valmet K.K.)

The fiber to be complexed is preferably used in such an amount that 15 % or more of the surface of the fiber is covered by inorganic particles, and the weight ratio between the fiber and the inorganic particles can be, for example, 5/95 to 95/5, or may be 10/90 to 90/10, 20/80 to 80/20, 30/70 to 70/30, or 40/60 to 60/40.

In the complex fibers of the present invention, 15 % or more of the surface of the fiber is covered by inorganic particles in preferred embodiments, and when the surface of the cellulose fiber is covered at such an area ratio, characteristics attributed to the inorganic particles predominate while characteristics attributed to the fiber surface diminish.

The complex fibers of the present invention can be used in various shapes including, for example, powders, pellets, moldings, aqueous suspensions, pastes, sheets, boards, blocks, and other shapes. Further, the complex fibers can be used as main components with other materials to form molded products such as moldings, particles or pellets. The dryer used to dry them into powder is not specifically limited either, and air-flow dryers, band dryers, spray dryers and the like can be conveniently used, for example.

The complex fibers of the present invention can be used for various applications and they can be widely used for any applications including, for example, papers, fibers, cellulosic composite materials, filter materials, paints, plastics and other resins, rubbers, elastomers, ceramics, glasses, tires, building materials (asphalt, asbestos, cement, boards, concrete, bricks, tiles, plywoods, fiber boards, ceiling materials, wall materials, floor materials, roof materials and the like), furniture, various carriers (catalyst carriers, drug carriers, agrochemical carriers, microbial carriers and the like), adsorbents (decontaminants, deodorizers, dehumidifying agents and the like), antimicrobial materials, antiviral agents, anti-wrinkle agents, clay, abrasives, friction materials, modifiers, repairing materials, thermal insulation materials, thermal resistant materials, heat dissipating materials, damp proofing materials, water repellent materials, waterproofing materials, light shielding materials, sealants, shielding materials, insect repellents, adhesives, medical materials, paste materials, discoloration inhibitors, electromagnetic wave absorbers, insulating materials, acoustic insulation materials, interior materials, vibration damping materials, semiconductor sealing materials, radiation shielding materials, flame retardant materials and the like. They also can be used for various fillers, coating agents and the like in the applications mentioned above. Among them, they are preferably applied for adsorbents, antimicrobial materials, antiviral agents, friction materials, radiation shielding materials, flame retardant materials, building materials, and thermal insulation materials.

The complex fibers of the present invention may also be applied for papermaking purposes including, for example, printing papers, newsprint papers, inkjet printing papers, PPC papers, kraft papers, woodfree papers, coated papers, coated fine papers, wrapping papers, thin papers, colored woodfree papers, cast-coated papers, carbonless copy papers, label papers, heat-sensitive papers, various fancy papers, water-soluble papers, release papers, process papers, hanging base papers, flame retardant papers (incombustible papers), base papers for laminated boards, printed electronics papers, battery separators, cushion papers, tracing papers, impregnated papers, papers for ODP, building papers, papers for decorative building materials, envelope papers, papers for tapes, heat exchange papers, chemical fiber papers, aseptic papers, water resistant papers, oil resistant papers, heat resistant papers, photocatalytic papers, cosmetic papers (facial blotting papers and the like), various sanitary papers (toilet papers, facial tissues, wipers, diapers, menstrual products and the like), cigarette rolling papers, paperboards (liners, corrugating media, white paperboards and the like), base papers for paper plates, cup papers, baking papers, abrasive papers, synthetic papers and the like. Thus, the present invention makes it possible to provide complexes of a fiber with inorganic particles having a small primary particle size and a narrow particle size distribution so that they can exhibit different characteristics from those of conventional inorganic fillers having a particle size of more than 2 µm. Further, the complexes of a fiber with inorganic particles can be formed into sheets in which the inorganic particles are not only more readily retained but also uniformly dispersed rather than being aggregated in contrast to those in which inorganic particles are simply mixed with a fiber. In preferred embodiments, the inorganic particles in the present invention are not only adhered to the outer surface and the inside of the lumen of the fiber but also produced within microfibrils, as proved by the results of electron microscopic observation.

Further, the complex fibers of the present invention can be used typically in combination with particles known as inorganic fillers and organic fillers or various fibers. For example, inorganic fillers include calcium carbonate (precipitated calcium carbonate, ground calcium carbonate), magnesium carbonate, barium carbonate, aluminum hydroxide, calcium hydroxide, magnesium hydroxide, zinc hydroxide, clay (kaolin, calcined kaolin, delaminated kaolin), talc, zinc oxide, zinc stearate, titanium dioxide, silica products prepared from sodium silicate and a mineral acid (white carbon black, silica/calcium carbonate complexes, silicaltitanium dioxide complexes), terra alba, bentonite, diatomaceous earth, calcium sulfate, zeolite, inorganic fillers consisting of the ash produced and recycled from the deinking process and inorganic fillers consisting of complexes of the ash with silica or calcium carbonate formed during recycling, etc. Calcium carbonate-silica complexes include not only calcium carbonate and/or precipitated calcium carbonate-silica complexes but also those complexes using amorphous silica such as white carbon black. Organic fillers include urea-formaldehyde resins, polystyrene resins, phenol resins, hollow microparticles, acrylamide complexes, wood-derived materials (microfibers, microfibrillar fibers, kenaf powders), modified/insolubilized starches, ungelatinized starches and the like. Fibers that can be used include, without limitation, not only natural fibers such as celluloses but also synthetic fibers artificially synthesized from raw materials such as petroleum, regenerated fibers (semisynthetic fibers) such as rayon and lyocell, and even inorganic fibers and the like. In addition to the examples mentioned above, natural fibers include protein fibers such as wool and silk yarns and collagen fibers; complex carbohydrate fibers such as chitin-chitosan fibers and alginate fibers and the like. Examples of cellulosic raw materials include pulp fibers (wood pulps and non-wood pulps), bacterial celluloses, animal-derived celluloses such as Ascidiacea, algae, etc., among which wood pulps may be prepared by pulping wood raw materials. Examples of wood raw materials include softwoods such as Pinus densiflora, Pinus thunbergii, Abies sachalinensis, Picea jezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and mixed materials thereof; and hardwoods such as Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and mixed materials thereof. The technique for pulping the wood raw materials is not specifically limited, and examples include pulping processes commonly used in the papermaking industry. Wood pulps can be classified by the pulping process and include, for example, chemical pulps obtained by digestion via the kraft process, sulfite process, soda process, polysulfide process or the like; mechanical pulps obtained by pulping with a mechanical force such as a refiner, grinder or the like; semichemical pulps obtained by pulping with a mechanical force after a chemical pretreatment; waste paper pulps; deinked pulps and the like. The wood pulps may have been unbleached (before bleaching) or bleached (after bleaching). Examples of non-wood pulps include cotton, hemp, sisal (Agave sisalana), abaca (Musa textilis), flax, straw, bamboo, bagas, kenaf, sugar cane, corn, rice straw, Broussonetia kazinoki × B. papyrifera, Edgeworthia chrysantha and the like. The wood pulps and non-wood pulps may be unbeaten or beaten. Moreover, these cellulosic raw materials can be further treated so that they can also be used as powdered celluloses, chemically modified celluloses such as oxidized celluloses, and cellulose nanofibers (CNFs) (microfibrillated celluloses (MFCs), TEMPO-oxidized CNFs, phosphate esters of CNFs, carboxymethylated CNFs, mechanically ground CNFs). Synthetic fibers include polyesters, polyamides, polyolefins, and acrylic fibers; semisynthetic fibers include rayon, acetate and the like; and inorganic fibers include glass fiber, carbon fiber, various metal fibers and the like. All these may be used alone or as a combination of two or more of them.

The average particle size or shape or the like of the inorganic particles forming part of the complex fibers of the present invention can be identified by electron microscopic observation. Further, inorganic particles having various sizes or shapes can be complexed with a fiber by controlling the conditions under which the inorganic particles are synthesized.

### EXAMPLES

The present invention will be explained more specifically with reference to examples, but the present invention is not limited to these examples. Unless otherwise specified, the concentrations, parts and the like as used herein are based on weight, and the numerical ranges are described to include their endpoints.

### Experiment 1. Synthesis and evaluation of complex fibers

### 1-1. Complex fibers of zinc-based hydrotalcite with a fiber (Samples a and b)

Solutions for synthesizing hydrotalcite (Zn-based HT) were provided. An aqueous mixed solution of Na₂CO₃ (FUJIFILM Wako Pure Chemical Corporation) and NaOH (FUJIFILM Wako Pure Chemical Corporation) was prepared as an alkaline solution (solution A). On the other hand, an aqueous mixed solution of ZnSO₄ (FUJIFILM Wako Pure Chemical Corporation) and Al₂(SO₄)₃.16H₂O (FUJIFILM Wako Pure Chemical Corporation) was prepared as an acid solution (solution B).
- Alkaline solution (solution A: Na₂CO₃ concentration 0.05 M; NaOH concentration 0.8 M);
- Acid solution (solution B, Zn-based: ZnSO₄ concentration 0.9 M; Al₂(SO₄)₃.16H₂O concentration 0.15 M).

A cellulose fiber was used as the fiber to be complexed. Specifically, a pulp fiber was used, which comprises a bleached hardwood kraft pulp (LBKP from Nippon Paper Industries Co., Ltd., fiber width 20 µm) and a bleached softwood kraft pulp (NBKP from Nippon Paper Industries Co., Ltd., fiber width 50 µm) in a weight ratio of 8:2 and which has been adjusted to a Canadian Standard Freeness of 300 ml using a single disc refiner (SDR).

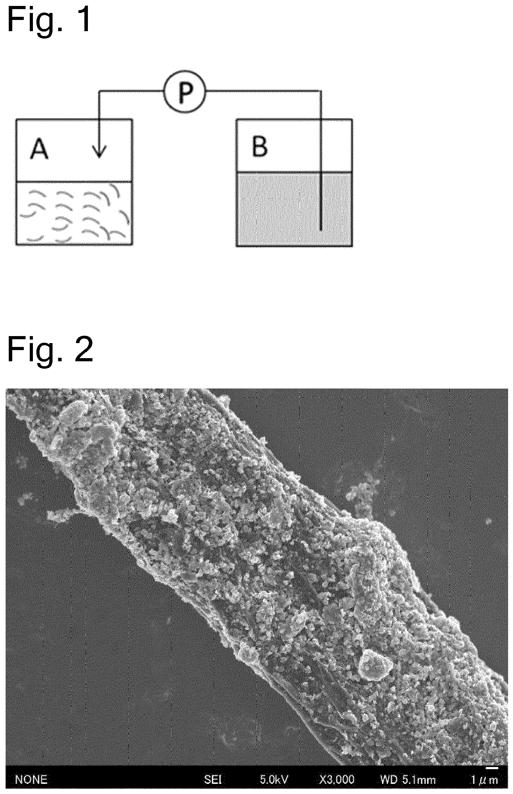

The alkaline solution was added to the pulp fiber to provide an aqueous suspension containing the pulp fiber (pulp fiber consistency: 3.0 %; pH: about 12.8). A 1000-L reaction vessel was charged with this aqueous suspension (pulp solids 20 kg), and the acid solution was added dropwise while stirring the aqueous suspension to synthesize a complex fiber of hydrotalcite microparticles with the fiber. The system as shown in Fig. 1 was used and the reaction temperature was 50 °C, and when the pH of the reaction mixture reached about 7.5, the dropwise addition was stopped. After completion of the dropwise addition, the reaction mixture was aged under stirring for 30 minutes. The aged sample was centrifuged by using a centrifugal dehydrator, and the complex fiber was washed by repeating a cycle of further adding 2 to 10 volumes of water and centrifuging the mixture until the electrical conductivity reached 100 mS/m or less.

### 1-2. A complex fiber of barium sulfate with a fiber (Sample c)

Similarly to Sample a, a pulp fiber (LBKP:NBKP = 8:2) adjusted to Canadian Standard Freeness of 300 ml was used.

Barium hydroxide octahydrate (FUJIFILM Wako Pure Chemical Corporation) was added to the pulp fiber to provide an aqueous suspension containing the pulp fiber (pulp fiber consistency: 3.0 %; pH: about 12.5). A 1000-L reaction vessel was charged with this aqueous suspension (pulp solids 20 kg), and sulfuric acid (prepared as a 2 % aqueous solution from FUJIFILM Wako Pure Chemical Corporation) was added dropwise while stirring the aqueous suspension to synthesize a complex of barium sulfate microparticles with the fiber. The system as shown in Fig. 1 was used and the reaction temperature was 50 °C, and when the pH of the reaction mixture reached about 7.5, the dropwise addition was stopped. After completion of the dropwise addition, the reaction mixture was stirred for 30 minutes, and then washed with about 10 volumes of water to remove the salt. Then, the reaction mixture was centrifuged by using a centrifugal dehydrator, and the complex fiber was washed by repeating a cycle of further adding 2 to 10 volumes of water and centrifuging the mixture until the electrical conductivity reached 100 mS/m or less.

### 1-3. A complex fiber of copper-containing zinc-based hydrotalcite with a fiber (Sample d)

Similarly to Sample a, a pulp fiber (LBKP:NBKP = 8:2) adjusted to Canadian Standard Freeness of 300 ml was used.

For synthesizing copper-containing zinc-based hydrotalcite (Cu-containing Zn-based HT), an aqueous mixed solution of Na₂CO₃ (FUJIFILM Wako Pure Chemical Corporation) and NaOH (FUJIFILM Wako Pure Chemical Corporation) was prepared as an alkaline solution (solution A). On the other hand, an aqueous mixed solution of three chemicals, i.e., ZnSO₄ (FUJIFILM Wako Pure Chemical Corporation), CuSO₄ (FUJIFILM Wako Pure Chemical Corporation), and Al₂(SO₄)₃.16H₂O (FUJIFILM Wako Pure Chemical Corporation) was prepared as an acid solution (solution C).
- Alkaline solution (solution A: Na₂CO₃ concentration 0.05 M; NaOH concentration 0.8 M);
- Acid solution (solution C: ZnSO₄ concentration 0.75 M; CuSO₄ concentration 0.15 M; Al₂(SO₄)₃.16H₂O concentration 0.15 M).

A complex fiber was synthesized in the same manner as described for Sample a except that the chemicals shown above were used, and the aged sample was centrifuged by using a centrifugal dehydrator, and the complex fiber was washed.

### 1-4. A complex fiber of copper-containing zinc-based hydrotalcite with a PET fiber (Reference Sample e)

A complex fiber was synthesized in the same manner as described for Sample d except that the fiber used was a polyethylene terephthalate fiber (PET, fiber diameter: 1.7 dtex, fiber length: 5 mm), and the aged sample was centrifuged by using a centrifugal dehydrator, and the complex fiber was washed.

### 1-5. A complex fiber of titanium oxide and magnesium-based hydrotalcite with a fiber (Sample f)

Similarly to Sample a, a pulp fiber (LBKP:NBKP = 8:2) adjusted to Canadian Standard Freeness of 300 ml was used.

For synthesizing magnesium-based hydrotalcite (Mg-based HT), an alkaline solution (solution A) was prepared as well as an aqueous mixed solution of MgSO₄ (FUJIFILM Wako Pure Chemical Corporation) and Al₂(SO₄)₃.16H₂O (FUJIFILM Wako Pure Chemical Corporation) as an acid solution (solution D).
- Alkaline solution (solution A: Na₂CO₃ concentration 0.15 M; NaOH concentration 2.4 M);
- Acid solution (solution D: MgSO₄ concentration 0.9 M; Al₂(SO₄)₃.16H₂O concentration 0.15 M).

The pulp fiber was added to the alkaline solution to provide an aqueous suspension containing the pulp fiber (pulp fiber consistency: 2.0 %, pH: about 12.7). This aqueous suspension (pulp solids 3 kg) was thoroughly stirred with 3.5 kg of titanium dioxide (R-3L, from Sakai Chemical Industry Co., Ltd.). The acid solution was added dropwise while stirring the aqueous suspension at a reaction temperature of 50 °C, and when the pH of the reaction mixture reached about 7, the dropwise addition was stopped. After completion of the dropwise addition, the reaction mixture was stirred for 30 minutes, and then washed with 10 volumes of water to remove the salt. Then, the reaction mixture was centrifuged by using a centrifugal dehydrator, and the complex fiber was washed by repeating a cycle of further adding 2 to 10 volumes of water and centrifuging the mixture until the electrical conductivity reached 100 mS/m or less.

### 1-6. Evaluation of the complex fibers

The complex fiber samples were evaluated according to the procedures shown below.

### (1) Surface coverage ratio

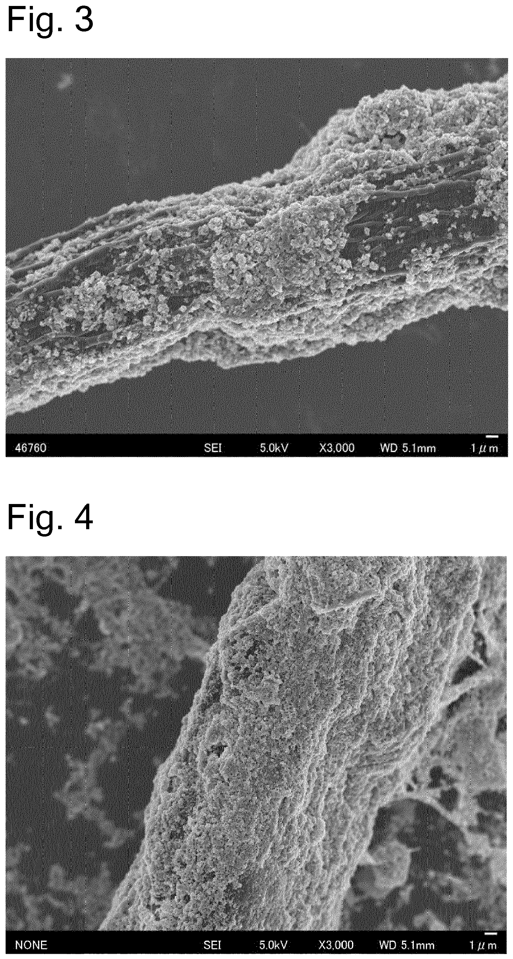

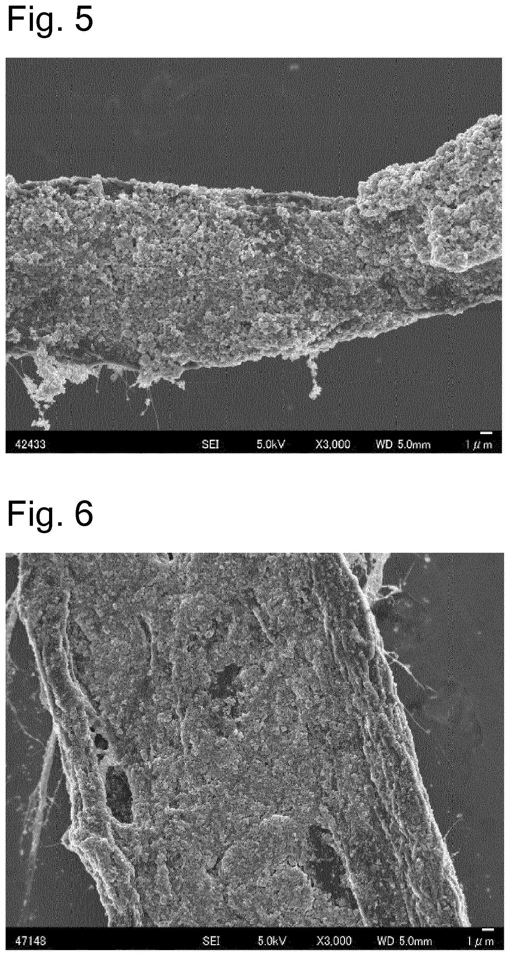

Each complex fiber obtained was observed with an electron microscope (Sample a: Fig. 2, Sample b: Fig. 3, Sample c: Fig. 4, Sample d: Fig. 5, Sample f: Fig. 6). In each sample, about 70 % of the fiber surface was covered by inorganic particles.

### (2) Water content (moisture content)

Each sample was dried at 105 °C for about 2 hours, and the water content was calculated from the weight loss due to drying. It should be noted that the solids content (concentration) refers to "100 - water content".

### (3) Weight ratio between fiber and inorganic particles

Each sample was dried at 105 °C for about 2 hours, and the ash content of the complex fiber was determined according to JIS P 8251: 2003 to calculate the weight ratio between the fiber and the inorganic particles forming the complex fiber.

**[Table 1]**

| Sample | a | b | c | d | e (reference) | f |
|---|---|---|---|---|---|---|
| Fiber | Cellulose fiber | Cellulose fiber | Cellulose fiber | Cellulose fiber | PET fiber | Cellulose fiber |
| Inorganic particles | Hydrotalcite | Hydrotalcite | Barium sulfate | Cu-containing hydrotalcite | Cu-containing hydrotalcite | Titanium oxide+MgHT |
| Surface coverage ratio | 70% | 70% | 70% | 70% | 70% | 70% |
| Water content | 70% | 70% | 70% | 70% | 70% | 70% |
| Weight ratio between fiber and inorganic particles | 50:50 | 30:70 | 30:70 | 50:50 | 50:50 | 50:50 |

### Experiment 2. Preparation and evaluation of granules containing the complex fibers

### 2-1. Preparation of granules containing the complex fibers

### (Sample 1)

Sample a was used as a starting material to prepare granules. Specifically, Sample a (water content: about 70 %) was poured into a ProShear mixer (model WB from Pacific Machinery & Engineering Co., Ltd.) and stirred at ordinary temperature. Subsequently, steam was fed into the ProShear mixer to raise the temperature in the system to 80 °C or more, and the sample was dried under stirring. The sample was dried to a water content of about 10 %, and then granulated with water (the finished particle size after granulation: about 0.5 mm; the water content after granulation: about 50 %). A 0.5-mesh sieve was used to finally give granules having a particle size of 0.5 mm or less.

### (Sample 2)

Granules were prepared in the same manner as described for Sample 1 except that Sample b was used as a starting material. A 0.5 to 1.0-mesh sieve was used to finally give granules having a particle size of 0.5 to 1.0 mm.

### (Sample 3)

The granules of Sample 2 were dried in air for 72 hours to prepare granules having a water content of 20 %.

### (Sample 4)

Granules were prepared in the same manner as described for Sample 3 except that Sample a was used as a starting material.

### (Sample 5)

Sample b was used as a starting material to prepare granules in the same manner as described for Sample 2 except that the finished particle size after granulation was 1.0 mm. A 1.0 to 3.0-mesh sieve was used to finally give granules having a particle size of 1.0 to 3.0 mm.

### (Sample 6)

The granules of Sample 5 were dried in air for 72 hours to prepare granules having a water content of 20 %.

### (Sample 7)

Granules were prepared in the same manner as described for Sample 5 except that Sample a was used as a starting material.

### (Sample 8)

Sample b was used as a starting material to prepare granules in the same manner as described for Sample 3 except that the finished particle size after granulation was 3.0 mm. A 3.0 to 4.0-mesh sieve was used to finally give granules having a particle size of 3.0 to 4.0 mm.

### (Sample 9)

Sample b (water content: about 70 %) was dried to a water content of 10 % or less, and further comminuted to a particle size of about 0.5 mm or less using a cutter mill. The processed sample was fed into a rotary granulator (CF-360N from FREUND CORPORATION) and granulated with water (the finished particle size after granulation: about 1.0 mm; the water content after granulation: about 20 %). A 1.0 to 3.0-mesh sieve was used to finally give granules having a particle size of 1.0 to 3.0 mm.

### (Sample 10)

This sample was prepared in the same manner as described for Sample 3 except that Sample c was used as a starting material.

### (Sample 11)

This sample was prepared in the same manner as described for Sample 2 except that Sample d was used as a starting material.

### (Reference Sample 12)

This sample was prepared in the same manner as described for Sample 2 except that Reference Sample e was used as a starting material.

### (Sample 13)

This sample was prepared in the same manner as described for Sample 2 except that Sample f was used as a starting material.

### (Sample 14: Comparative example)

This sample was prepared by adjusting Sample b to a water content of about 70 % using a Buchner funnel.

### (Sample 15: Comparative example)

Water was mixed with 100 g of a powdered cellulose (brand name: W-50 from Nippon Paper Industries Co., Ltd., average particle size: 40 µm) under stirring, and then this wet powder (water content: about 5 %) was granulated with water using a rotary granulator (the finished particle size after granulation: about 1 mm; the water content after granulation: about 35 %). The resulting granulated product was sieved to give granules having a particle size of 0.5 to 1.0 mm.

### 2-2. Evaluation of the granules

Each sample was evaluated according to the procedures shown below.

### (1) Water content (moisture content), and inorganic mass fraction

The water content (%) was determined in the same manner as in Experiment 1. Further, the weight ratio between the fiber and the inorganic particles was also determined in the same manner as in Experiment 1 to calculate the inorganic mass fraction (%).

### (2) Angle of repose (flowability)

A powder characteristics tester (Powder Tester model PT-X from HOSOKAWA MICRON CORPORATION) was used to determine the angle of repose by dropping each powder sample through the attached metal funnel (ϕ 5 mm) at a vibration setting of 1.5 and measuring the slope angle of the heap built up of the powder in the angle measurement mode setting "Peak Operation".

The sample was assessed as "flowable" if the angle of repose can be determined or as "non-flowable" if it cannot be determined. Lower values of the angle of repose mean higher flowability.

### (3) Dispersibility

In a plastic bag (170 mm × 240 mm), 90 g of sodium chloride and 10 g of each sample are manually mixed for 3 minutes. To 10 g of the mixture is added 200 ml of distilled water to dissolve sodium chloride using a stirrer. The treated solution was filtered through a filter paper (Class 5B for use in quantitative analysis as defined in JIS P3801), and the residue on the filter paper was dried under tension at 50 °C for 2 hours, and then the weight of granules contained in 10 g of the mixture was measured. The dispersibility was calculated by the equation "(the weight of granules after drying / 1 g) × 100", and the sample was assessed as pass (o) if it was 70 % or more or fail (x) if it was less than 70 %.

### (4) Bulk density

The mass of each sample loosely packed in a predetermined volume was measured and divided by the volume to determine the "bulk density (loose bulk density)". Specifically, the mass of each sample filled to the line marked 1000 mL in a 1000-mL graduated cylinder was measured to calculate the value of bulk density (g/cm³).

### (5) Particle size distribution

A laser diffraction particle size distribution analyzer (Mastersizer 3000 from Malvern Panalytical) was used. The volume-weighted 50th percentile particle size (average particle size) was determined from the sample used for analysis (0.3 to 1.0 g).

**[Table 2]**

| Sample | 1 | 2 | 3 | 4 | 5 | 6 | 7 | 8 | 9 | 10 | 11 | 12 | 13 | 14 (Comparative example) | 15 (Comparative example) |
|---|---|---|---|---|---|---|---|---|---|---|---|---|---|---|---|
| Complex fiber | Sample a | Sample b | Sample b | Sample a | Sample b | Sample b | Sample a | Sample b | Sample b | Sample c | Sample d | Reference Sample e | Sample f | Sample b | - |
| Paticle size of granules(mm) | 0.1-0.5 | 0.5-1.0 | 0.5-1.0 | 0.5-1.0 | 1.0-3.0 | 1.0-3.0 | 1.0-3.0 | 3.0-4.0 | 0.5-1.0 | 0.5-1.0 | 0.5-1.0 | 0.5-1.0 | 0.5-1.0 | - | 0.5-1.0 |
| Water content of granules | 50% | 50% | 20% | 20% | 50% | 20% | 20% | 20% | 20% | 20% | 50% | 50% | 50% | 70% | 35% |
| Inorganic mass fraction | 50.4% | 69.6% | 69.8% | 50.1% | 69.7% | 69.6% | 502% | 69.6% | 69.8% | 69.9% | 50.3% | 50.7% | 50.1% | 70.2% | 0.5% |
| Angle of repose | 52.3° | 50.1° | 41.5° | 41.3° | 49.9° | 39.8° | 39.3° | 36.8° | 41.2° | 42.5° | 50.4° | 50.1° | 50.9° | Not determined | Not determined |
| Flowability | ○ | ○ | ○ | ○ | ○ | ○ | ○ | ○ | ○ | ○ | ○ | ○ | ○ | × | × |
| Dispersibility | ○ | ○ | ○ | ○ | ○ | ○ | ○ | ○ | ○ | ○ | ○ | ○ | ○ | × | ○ |
| Bulk density | 0.71 | 0.67 | 0.66 | 0.67 | 0.61 | 0.62 | 0.61 | 0.58 | 0.68 | 0.67 | 0.69 | 0.67 | 0.68 | 0.50 | 0.67 |
| Particle size distribution D50 | 0.33 | 0.79 | 0.74 | 0.77 | 1.54 | 1.33 | 124 | 3.16 | 0.72 | 0.79 | 0.79 | 0.76 | 0.69 | Not determined | 0.79 |

As shown in the table above, the granules of the present invention exhibited higher flowability and dispersibility as compared with the sample that had not been processed into granules.

## Claims

1. A granule comprising a complex fiber of a cellulose fiber with inorganic particles, and having a particle size of 0.1 to 10 mm and a water content of less than 60 %, wherein the inorganic particles comprise a metal salt of calcium, magnesium, barium or aluminum, or metal particles containing titanium, copper or zinc, or a silicate.

2. The granule of claim 1, having an angle of repose of 30 to 58°, wherein the angle of repose is determined according to the method of the description.

3. The granule of claim 1 or 2, wherein the inorganic particles are barium sulfate.

4. The granule of any one of claims 1 to 3, wherein the inorganic particles comprise hydrotalcite.

5. The granule of any one of claims 1 to 4, wherein the mass fraction of the inorganic particles in the granule is 10 % or more.

6. The granule of any one of claims 1 to 5, wherein the raw material of the cellulose fiber includes wood pulp fibers.

7. The granule of any one of claims 1 to 6, wherein 15 % or more of the surface of the cellulose fiber is covered by the inorganic particles.

8. The granule of any one of claim 1 to 7, wherein the granule has a particle size of 0.2 or more and 4 mm or less.

9. A process for preparing the granule of any one of claims 1 to 8, comprising the steps of:
synthesizing inorganic particles in a liquid containing a cellulose fiber to give a complex fiber; and granulating the complex fiber into granules having a particle size of 0.1 to 10 mm wherein the inorganic particles comprise a metal salt of calcium, magnesium, barium or aluminum, or metal particles containing titanium, copper or zinc, or a silicate.

10. The process of claim 9, wherein the complex fiber is granulated while it is dried in the granulating step.

11. The process of claim 9, wherein the complex fiber is granulated after it has been adjusted to a water content of less than 60 %.

12. The process of claim 9, wherein the complex fiber is granulated after it has been comminuted.

## Patentansprüche

1. Granulat umfassend eine komplexe Faser aus einer Cellulosefaser mit anorganischen Partikeln und mit einer Partikelgröße von 0,1 bis 10 mm und einem Wassergehalt von weniger als 60 %, wobei die anorganischen Partikel ein Metallsalz von Calcium, Magnesium, Barium oder Aluminium oder Metallpartikel, die Titan, Kupfer oder Zink enthalten, oder ein Silicat umfassen.

2. Granulat nach Anspruch 1 mit einem Schüttwinkel von 30 bis 58°, wobei der Schüttwinkel nach dem Verfahren der Beschreibung bestimmt wird.

3. Granulat nach Anspruch 1 oder 2, wobei die anorganischen Partikel Bariumsulfat sind.

4. Granulat nach einem der Ansprüche 1 bis 3, wobei die anorganischen Partikel Hydrotalkit umfassen.

5. Granulat nach einem der Ansprüche 1 bis 4, wobei der Masseanteil der anorganischen Partikel in dem Granulat 10 % oder mehr beträgt.

6. Granulat nach einem der Ansprüche 1 bis 5, wobei das Ausgangsmaterial der Cellulosefaser Holzzellstofffasern enthält.

7. Granulat nach einem der Ansprüche 1 bis 6, wobei 15 % oder mehr der Oberfläche der Cellulosefaser von den anorganischen Partikeln bedeckt ist.

8. Granulat nach einem der Ansprüche 1 bis 7, wobei das Granulat eine Partikelgröße von 0,2 oder mehr und 4 mm oder weniger aufweist.

9. Verfahren zur Herstellung des Granulats nach einem der Ansprüche 1 bis 8, umfassend die Schritte:
Synthetisieren anorganischer Partikel in einer Flüssigkeit, die eine Cellulosefaser enthält, um eine komplexe Faser zu erhalten; und Granulieren der komplexen Faser zu Granulat mit einer Partikelgröße von 0,1 bis 10 mm, wobei die anorganischen Partikel ein Metallsalz von Calcium, Magnesium, Barium oder Aluminium oder Metallpartikel, die Titan, Kupfer oder Zink enthalten, oder ein Silicat umfassen.

10. Verfahren nach Anspruch 9, wobei die komplexe Faser bei dem Granulierschritt granuliert wird, während sie getrocknet wird.

11. Verfahren nach Anspruch 9, wobei die komplexe Faser granuliert wird, nachdem sie auf einen Wassergehalt von weniger als 60 % eingestellt worden ist.

12. Verfahren nach Anspruch 9, wobei die komplexe Faser granuliert wird, nachdem sie zerkleinert worden ist.

## Revendications

1. Granulé comprenant une fibre complexe d'une fibre de cellulose avec des particules inorganiques, et ayant une taille de particule de 0,1 à 10 mm et une teneur en eau inférieure à 60 %, dans lequel les particules inorganiques comprennent un sel métallique de calcium, magnésium, baryum ou aluminium, ou des particules métalliques contenant du titane, du cuivre ou du zinc, ou un silicate.

2. Granulé selon la revendication 1, ayant un angle de repos de 30 à 58°, dans lequel l'angle de repos est déterminé selon le procédé de la description.

3. Granulé selon la revendication 1 ou 2, dans lequel les particules inorganiques sont du sulfate de baryum.

4. Granulé selon l'une quelconque des revendications 1 à 3, dans lequel les particules inorganiques comprennent de l'hydrotalcite.

5. Granulé selon l'une quelconque des revendications 1 à 4, dans lequel la fraction massique des particules inorganiques dans le granulé est de 10 % ou plus.

6. Granulé selon l'une quelconque des revendications 1 à 5, dans lequel la matière première de la fibre de cellulose comprend des fibres de pâte de bois.

7. Granulé selon l'une quelconque des revendications 1 à 6, dans lequel 15 % ou plus de la surface de la fibre de cellulose est recouverte par les particules inorganiques.

8. Granulé selon l'une quelconque des revendications 1 à 7, dans lequel le granulé a une taille de particule de 0,2 ou plus et de 4 mm ou moins.

9. Procédé de préparation du granulé selon l'une quelconque des revendications 1 à 8, comprenant les étapes de :
synthèse de particules inorganiques dans un liquide contenant une fibre de cellulose pour donner une fibre complexe ; et granulation de la fibre complexe en granulés ayant une granulométrie de 0,1 à 10 mm, les particules inorganiques comprenant un sel métallique de calcium, magnésium, baryum ou aluminium, ou des particules métalliques contenant du titane, du cuivre ou du zinc, ou un silicate.

10. Procédé selon la revendication 9, dans lequel la fibre complexe est granulée pendant qu'elle est séchée dans l'étape de granulation.

11. Procédé selon la revendication 9, dans lequel la fibre complexe est granulée après avoir été ajustée à une teneur en eau inférieure à 60 %.

12. Procédé selon la revendication 9, dans lequel la fibre complexe est granulée après avoir été broyée.
